Europäisches Patentamt

European Patent Office

Office européen des brevets

(11) Publication number: **0 462 711 A1**

# EUROPEAN PATENT APPLICATION

(21) Application number: **91304854.2**

(22) Date of filing: **29.05.91**

(51) Int. Cl.5: **G01F 1/84**

(30) Priority: **16.06.90 GB 9013507**
**27.06.90 GB 9014318**
**06.07.90 GB 9015015**

(43) Date of publication of application:
**27.12.91 Bulletin 91/52**

(84) Designated Contracting States:
**AT BE CH DE DK FR GB IT LI NL SE**

(71) Applicant: **IMPERIAL CHEMICAL INDUSTRIES PLC**
**Imperial Chemical House, Millbank**
**London SW1P 3JF(GB)**

(72) Inventor: **Clarke, John Robin Paul**
**13 Old Wool Lane**
**Cheadle, Cheshire SK8 5JB(GB)**
Inventor: **Szyszko, Stefan**
**28 Victoria Road**
**Manchester, M16 8DP(GB)**

(74) Representative: **Collingwood, Anthony Robert et al**
**Imperial Chemical Industries PLC Legal Department: Patents P.O. Box 6 Bessemer Road**
**Welwyn Garden City Hertfordshire AL7 1HD(GB)**

(54) **Fluid flow measurement.**

(57) Fluid flow is measured by exciting a vibratory system 11 with a sinusoidal driving force with a frequency corresponding to the natural frequency of the system and exposing the system to vibration induced by the fluid flow, eg. by passing the fluid through ducting 11 forming part of the vibratory system. A spectral representation of the vibration of the system is obtained by means of a detector 18 located at a pseudo-node of the system, eg. a nodal plate 14a, and the signal is analysed to derive the fundamental frequency component and a harmonic component, typically the first even harmonic, which is favoured by the design of the system. The ratio of the harmonic and fundamental components is computed and provides a measure of the fluid flow to which the system is exposed. The technique may be used as a check facility for a Coriolis mass flow meter.

Fig 1

This invention relates to fluid flow measurement.

A recently developed form of fluid flow meter is the Coriolis mass flow meter in which the flow to be measured is passed through a double loop tube system, the loops of which are connected together at node points and are vibrated by means of transducers attached between the loops and arranged to impress a single frequency driving force to the loops, the frequency of the driving force usually corresponding substantially to the natural frequency of the double loop tube system when the latter is filled with fluid in a static, non-flowing state. Coriolis forces arising from the flow of fluid through the loops affect the phase of the vibration impressed by the transducers and this is detected by sensors which also bridge the loops. Since the Coriolis forces and hence the altered phase of the vibration depends on the mass flow rate through the loops, the phase change can be used as a measure of the fluid flow rate. The signals produced by the sensors are filtered in order to exclude spurious vibrations from the pipeline from which the flow is derived and/or from pumps, valves, agitators or motors associated with the fluid circuit.

It has been found that such a mass flow meter can be operated in another mode, and this discovery forms the basis of a new method and apparatus for measuring fluid flow which can be used in or independently of a Coriolis mass flow meter. In addition to providing a check facility for a Coriolis mass flow meter, the method of the present invention can form the basis of new forms of fluid flow meter which can have advantages over existing Coriolis mass flow meters, for example in terms of cost and simplicity, and which may be useful in situations where such Coriolis mass flow meters may be unsuitable. In addition, when the new method is operated in certain modes, it is capable of providing information about the fluid flow which may not be otherwise obtainable with existing Coriolis mass flow meters.

According to one aspect of the present invention there is provided a method of measuring fluid flow comprising exciting a vibratable system which has a design such that, when set into vibration, the generation of at least one harmonic component is favoured, and comparing said favoured harmonic component or components with one another and/or the fundamental frequency component of the system vibration to derive a measure of the flow.

Usually the vibratable system will be excited with a driving frequency applied by suitable drive means such as a transducer while simultaneously subjecting the system to vibration induced by the fluid flow, the system having a design such that, when set into vibration by said driving frequency and said fluid flow, the generation of at least one harmonic component is favoured, and said favoured harmonic component or components and/or the fundamental frequency component of the system vibration being compared to derive a measure of the flow.

The excitation may in some applications be entirely derived from the fluid itself where the fluid flow is highly turbulent and energetic (either inherently so or as a result of special measures being taken to bring this about) thus allowing the fluid to excite the natural mechanical resonances of the system, especially the fundamental and a specific harmonic or harmonics. Such turbulence in the fluid flow may be created for example by the inclusion of one or more turbuliser elements in the fluid flow, provided that the resulting turbulent flow is acceptable within the hydraulic circuit using the fluid as a working fluid, or provided that the turbulence can be reduced or eliminated prior to entry into parts of the circuit where turbulent flow is unacceptable. More usually however, excitation of the system will be effected by means of transducer and modified by the fluid flow which will usually be laminar.

It is already known from US Patent No. 4680974 to compare the fundamental and harmonic vibratory components in a straight tube Coriolis mass flow meter. In that case, the comparison is made to derive a correction factor in order to compensate for axial stresses in the tubes, this correction factor being used to modify the measured flow rate. In this known arrangement, the harmonic component is impressed on the system by means of an oscillator which is driven by a phase locked compound driving signal including the fundamental and harmonic components, specifically the fundamental and the first odd harmonic components. In contrast with this, the present invention employs the comparison between components (one of which may be the fundamental) to derive a measure of the fluid flow and comprises a passive system in the sense that the harmonic component (or components) is inherently generated by the vibrating system rather than being applied by an external driving force. The present invention may therefore employ a relatively simple, single frequency drive source.

Although, in principle, it would be possible to carry out the method of the invention by comparing different order harmonic components other than the fundamental (or zero order harmonic component), preferably the comparison is made between the fundamental component and a higher order harmonic component, more preferably between the fundamental component and the first order harmonic component which will be even and double the frequency of the fundamental component.

According to a more specific aspect of the invention there is provided a method of measuring fluid flow comprising exciting a vibratable system with a driving frequency substantially corresponding to the natural fundamental frequency of the system or a harmonic thereof while simultaneously subjecting the system to vibration induced by the fluid flow, the system having a design such that, when set into vibration by said driving frequency and said fluid flow, the generation of the first even harmonic component as a result of non-linearities and Coriolis force effects in the system is favoured, and comparing said first order harmonic component of the system vibration with the fundamental frequency component of the system vibration to derive a measure of the flow.

Advantageously, the components selected for comparison are such that the ratio of the selected components is monotonically related to the fluid flow, ie. as fluid flow increases, said ratio always increases (or alternatively always decreases). Preferably, said monotonical relationship applies over a predetermined range of fluid flow rates encompassing at least one order (and more preferably at least two orders) of magnitude in difference between the upper and lower limits of said range. Typically the monotonical relationship will apply over at least 70%, and more preferably at least 90% of the effective measuring range of the device.

Design of the system in order to favour a suitable harmonic component can be readily achieved by means of various expedients known to those skilled in the art for modifying the modal characteristics of vibratory systems. For example, stiffening elements such as node plates may be located and dimensioned so as to favour a desired harmonic component or components and hence render the same readily detectable. Another expedient which may be employed to modify the modal characteristics of the system involves the attachment of auxiliary masses to the system at appropriate locations on the system.

The components to be compared may be obtained by analysis of a spectral representation of the vibration of the system derived from detecting means.

Desirably, the harmonic and/or fundamental components of the system vibration are detected at a position on the system where the vibration is of reduced magnitude, for example at a pseudo-node, ie. the detecting means is conveniently located at a position where the system is substantially quiescent.

The system typically comprises a duct through which the fluid flows and, in doing so, imparts vibration to the system. The duct may be in the form of a loop or double loop of a Coriolis mass flow meter. In this case, the method of the invention may be used as a check on the correct functioning of the Coriolis meter by providing a separate measurement of the fluid flow. For example, if the sensing means of the Coriolis meter malfunctions or if a fault develops in the electrical circuitry associated with the sensing means, this may be detected by the method of the invention. In this context, it is to be noted that the sensing means of a conventional Coriolis mass flow meter tends to be subjected to relatively large amplitude vibration whereas the present invention allows fluid flow measurements to be made by detecting harmonic and fundamental components at a pseudo-node or pseudo-nodes where the system is substantially quiescent.

Typically the system comprises a pair of ducts through which the fluid flows either in serial or parallel fashion and the ducts may be connected together at one or more locations by means constraining the vibratory motion, detection of the harmonic and/or fundamental components conveniently being detected at such locations. For instance, the ducts may be interconnected at separate locations along their lengths by one or more stiffening or node plates and the harmonic and/or fundamental components may be detected by a sensor associated with each such plate.

Although the system preferably comprises a pair of ducts for conducting the fluid flow, this is not essential and the invention may be implemented using a single duct for example which may be in the form of a full or partial loop or of arcuate configuration or even straight provided that the duct is subjected to dynamic bending forces in operation, ie. when conducting the fluid flow to be measured.

Where the duct is constituted by the double loop of a Coriolis mass flow meter, the double loop may have node plates connecting the loops and the vibration may be detected from one or more of the node plates. For instance, there may be two node plates in which case the phases of the detectors on the two node plates may be reversed and their signals combined to provide an enhanced output.

The harmonic and/or fundamental components of the system vibration may be derived from the signals obtained from the detecting means by using a fast Fourier transform to give a "real time" flow indication.

The detecting means may comprise at least one piezo-electric, electromagnetic or optical detector or at least one wide frequency microphone or any other convenient device.

The invention will now be described by way of example only with reference to the accompanying drawings, in which:

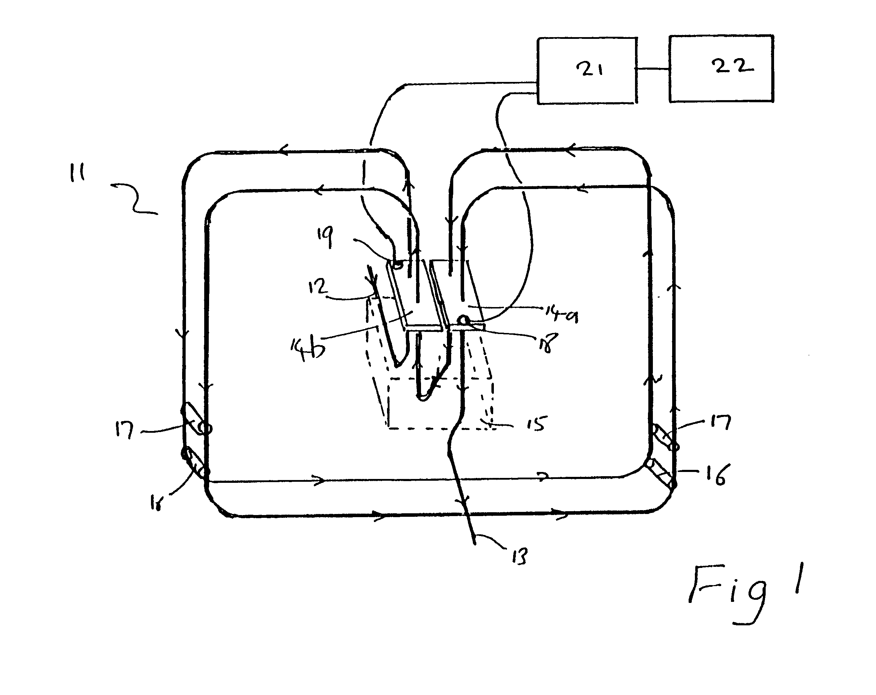

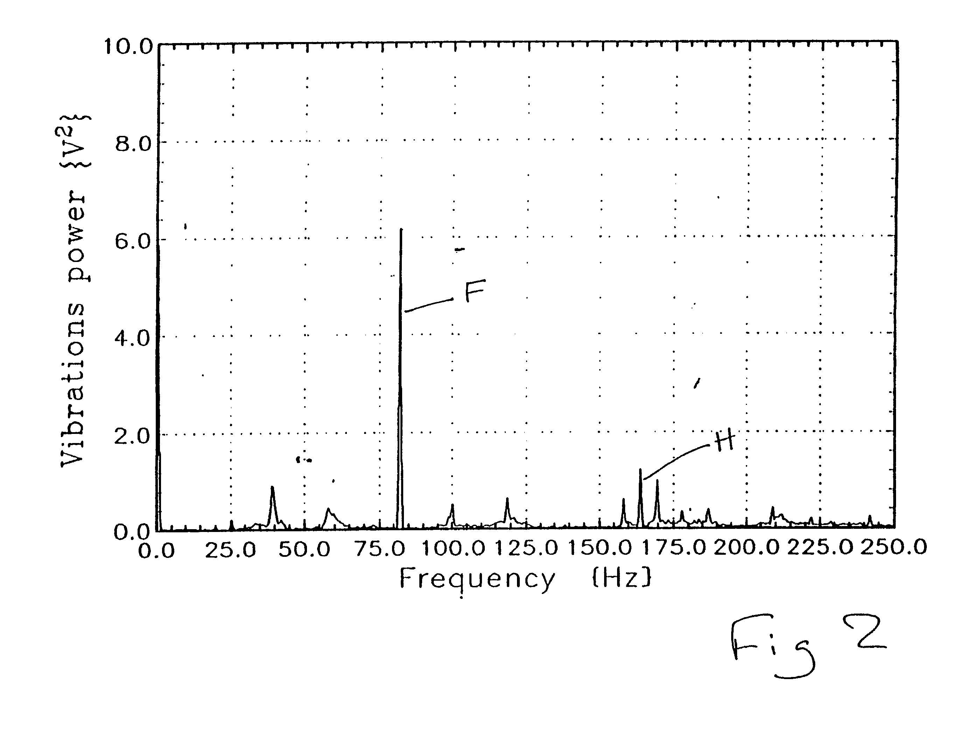

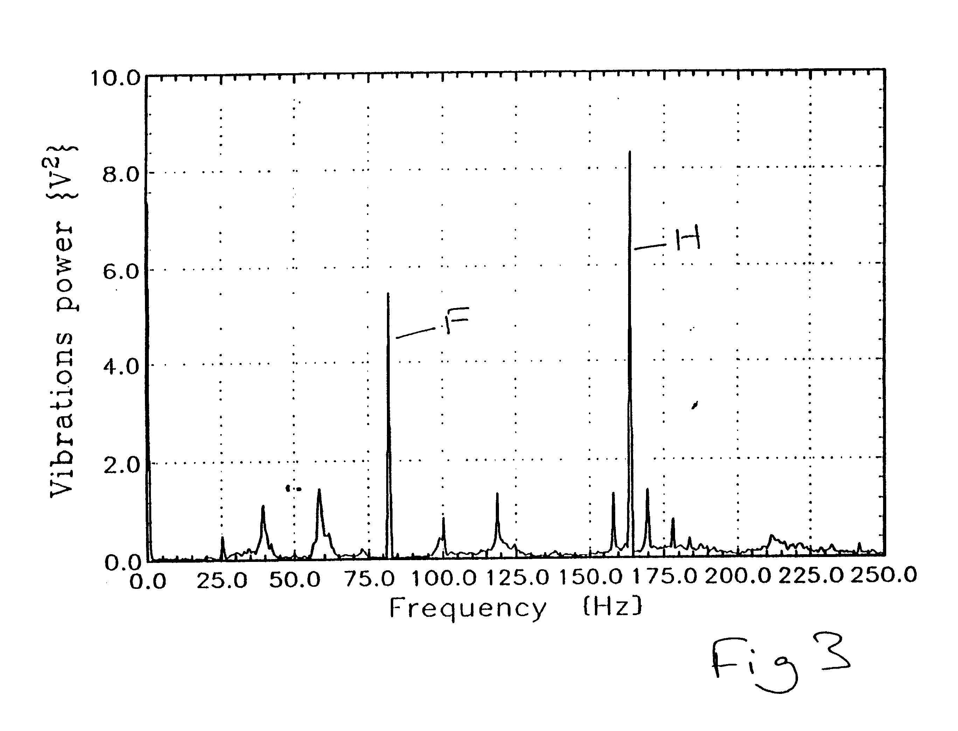

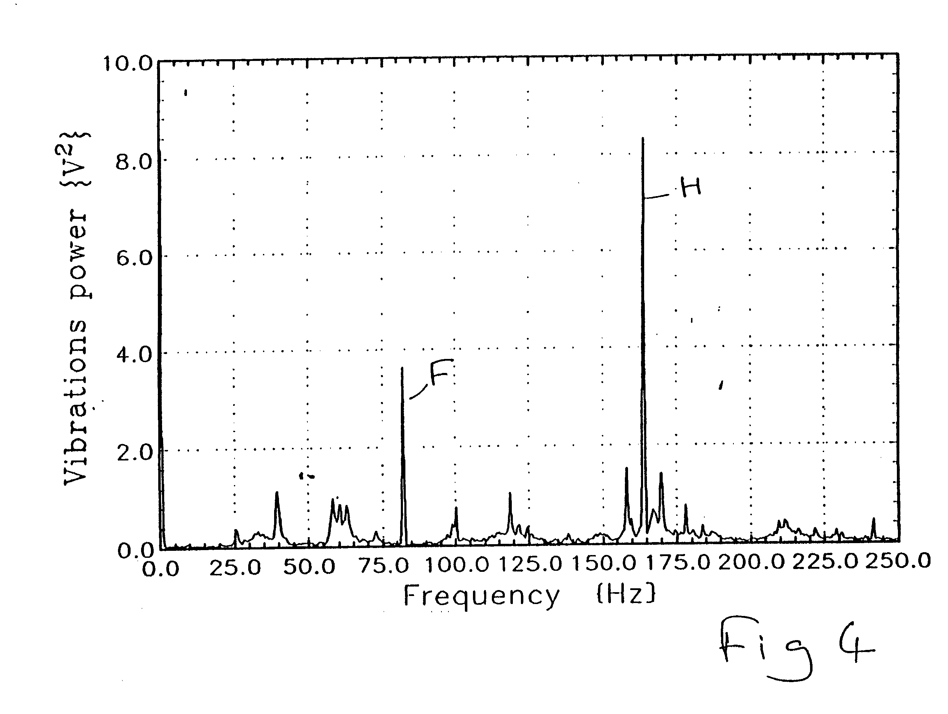

Figure 1 is a diagrammatic view of a Coriolis mass flow meter adapted to incorporate measuring means in accordance with the invention; and Figures 2 to 4 are graphs showing spectra corresponding to liquid mass flow rates of zero, 10 and 20 Kg/min.

Referring to Figure 1, as shown diagrammatically a Coriolis mass flow meter comprises a double loop tube arrangement 11 which has an inlet 12 and an outlet 13 for the fluid flow and is intended to be connected in series or in parallel with a flow to be measured. In the latter case, the double loop arrangement will only conduct a fraction of the liquid flow by-passed from the main flow, the liquid mass flow rate being determined by measuring the by-passed fraction flow rate and deducing the main flow rate from this measurement. The double loop arrangement is enclosed within a sealed housing (not shown).

Node plates 14a, 14b connect the two loops above a manifold arrangement 15 through which the inlet 12 and outlet 13 pass and which also connects the two loops together. The node plates constrain vibration of the loops in the vicinity of the manifold 15 and reduce stressing of the loops at their point of connection to the manifold. The node plates in effect define "pseudo-nodes", ie. substantially quiescent points at which vibration of the loops is relatively small.

Remote from the plates 14a, 14b are located electromagnetic force transducers 17 and electromagnetic detectors 16 bridging the two loops. The transducers 17 and detectors 16 are positioned at substantially symmetrically related locations where the magnitude of the vibration impressed on the loops is substantial. In normal use, a substantially sinusoidal driving force (ie. one having a single frequency) is applied to the double loop arrangement by the transducers to set the system comprising the double loop arrangement into oscillation and the oscillation is detected by the detectors 16. The frequency of the driving force is selected so as to correspond to the natural frequency (or possibly an appropriate harmonic thereof) of the double tube system when the latter is filled with the liquid in a static state, ie. zero mass flow. The driving force is controlled by means of a signal derived from the detectors 16 so that the magnitude of the vibration is maintained substantially constant irrespective of the mass flow rate passing through the double tube. In operation, the Coriolis forces generated as result of the circulation of the flow through the loops affect the detected signals in a deterministic way and the output signals of the detectors 16 are processed in a known manner to derive a measure of the mass flow rate.

As thus far described, the meter is of known design and operates in a known manner. In accordance with the invention, the flow rate can be determined in a different manner by detection of certain components of the frequency spectrum associated with the vibrating system. The fundamental frequency component is readily detectable and because of the non-linearities in the system, introduced for example by the nodal plates and Coriolis force effects, harmonic distortion of the driving force is produced with the consequent generation of harmonic components which may be detected. For some systems, at least one or more of the harmonic components may be favoured in the sense that such harmonic component is not damped out within the fluid flow range of interest. A particularly suitable harmonic component will often be the first even harmonic, ie. at double the frequency of the fundamental. If the basic design of the system is such that this particular harmonic component is suppressed, the modal characteristics of the system may be capable of modification so as to expose, ie. favour, the first even harmonic component. As previously mentioned such modifications may be implemented by the adoption of expedients such as changing the location and/or dimensioning of the nodal plates and/or by the addition of masses to the system. For instance, the nodal plate(s) may be designed to act as a local resonator for a selected harmonic component.

The first ever harmonic is often to be preferred because the occurrence of Coriolis forces due to fluid flow have the effect of increasing the amplitude of tube oscillation on one side of the Coriolis force induced free rotational node(s) and a simultaneous decrease on the opposite side. This effect will be present in virtually every form of flow meter based on the Coriolis effect, independently of the number of vibrational nodes (free and fixed) in the tube system. This simultaneous amplification of the fundamental driving frequency vibration magnitude in one part of the tube and its damping in the opposite part will tend to produce a local asymmetry in the vibrational mode and such a superimposed asymmetry gives rise to harmonic distortion of the fundamental driving frequency of the resonant vibration. The harmonic distortion will be particularly prominent in the first even harmonic component. Moreover, the larger the fluid flow rate through the vibratable system, the larger will be the harmonic distortion and fluid flow rate will therefore be well characterised by the ratio of spectral amplitudes of the first even harmonic and the fundamental frequency component.

If for a given system, the first even harmonic component is not amenable to being exposed by such expedients, it is possible to employ other harmonic components which are either favoured by the basic system design or can be readily exposed by expedients such as those previously mentioned.

In the illustrated embodiment, piezo-electric detectors 18 and 19 are respectively attached to the node plates 14a and 14b on opposite sides of the double loop arrangement in order to detect the fundamental frequency and at least one selected harmonic component of the system vibration, ie. as induced by the driving transducers and the fluid flow through the system. Figures 2 to 4 illustrate spectra derived from the output of one of the detectors 18, 19. It will be seen that the fundamental frequency (in this case about 80 Hz) and also the first even harmonic stand out sharply against the background. Also it will be seen from Figures 2 to 4 that the ratio of height of the first harmonic component H to that of the fundamental F changes strikingly and deterministically as the flow rate changes. In particular, it was found that this ratio increases monotonically with increasing liquid flow rate. The ratios (based on the spectral magnitudes of the fundamental and first harmonic component) at the three flow rates 0, 10.5 and 20.2 Kg/min are 0.23, 1.55 and 2.5. If the ratios are taken of the power values as represented by the areas encompassed by the traces corresponding to the fundamental and first harmonic components, the ratios were found to more nearly approximate a linear relationship for the particular instrument employed. Even where the relationship between the specified ratio and fluid flow is non-linear, it will be understood that a calibration curve may be derived for the system so that a ratio value obtained for an unknown fluid flow can be used in conjunction with the calibration curve to deduce the fluid flow corresponding to that ratio value.

By employing two detectors 18 and 19, signal enhancement and elimination of external influences can be achieved, if the phases of the detectors are reversed and their signals added, the antiphase signal will be doubled and all common phase signals will be cancelled. However, the signals provided by the individual detectors 18, 19, being broadband, can provide useful information about factors external to the meter and might be used for example to monitor pipeline, pump and valve performance and other hydrodynamic phenomena in the hydraulic circuit which uses the fluid as a working fluid.

The signals from the detectors 18, 19 are analysed in whatever way is suitable in an appropriately programmed computer 21 which may be programmed with a fast Fourier transform routine and displays the results derived on a display or printer 22. Instead of Fourier analysis of the signals, any other appropriate means of filtration analysis may be employed, eg. band pass filtration.

It will be seen that the addition of one or more detectors such as detectors 18, 19 to a Coriolis mass flow meter can provide a means of checking the performance of the meter and detecting malfunctioning of its detectors 16 which, because of their location, are subjected to much larger amplitude vibrations than the detectors 18, 19 and are consequently more vulnerable to failure or detachment of signal leads etc.

Although as described above, a measure of fluid flow is derived by comparing the fundamental and first even harmonic, the invention is not limited to employing these particular components; for instance, the comparison may be made between any two components (one of which may or may not be the fundamental) which are exposed or favoured by the system design. Also, while the invention is described with reference to a checking facility for a Coriolis mass flow meter, the invention may form the basis of a flow measuring system in its own right and it may not necessarily require the vibratory system to be in the form of a loop. In fact, any vibratable member which allows the derivation of a flow-dependent relationship between frequency components of the flow-affected vibration thereof may be usable. Thus, a meter in accordance with the invention may comprise a straight tube, rod, plate or other body through which or around or over which fluid may be caused to flow.

A meter according to the invention using a suitable broad band detector, such as a Bruel Kjaer piezo-electric accelerometer, may also be used to detect flow phase changes and can for example detect the early onset of cavitation on the basis of observations of the high frequency part of the power spectrum. In this instance, it is desirable for the detector(s) to be capable of detecting frequencies up to about 200 kHz as well as the lower frequencies of the fundamental and low harmonics. Conventional Coriolis meters do not permit such detection since they are designed to cease operation when any flow phase change occurs so as not to give spurious readings. Also such meters use processing electronics which apply narrow band pass filtration to the signals thereby eliminating frequencies that may be relevant to determining fluid flow characteristics such as cavitation.

A meter operating in accordance with the invention can also be self monitoring for internal material changes so as to give early warning of the onset of fatigue and damage due to cavitation, and some forms of contamination of the flow or malfunction of the the vibratory system by analysis of the spectrum of the detector signal(s).

**Claims**

1. A method of measuring fluid flow comprising exciting a vibratable system which has a design such that, when set into vibration, the generation of at least one harmonic component is favoured, and comparing said favoured harmonic component or components with one another and/or the fundamental frequency component of the system vibration to derive a measure of the flow.

2. A method as claimed in Claim 1 in which the system is excited by means of drive means while simultaneously subjecting the system to vibration induced by the fluid flow.

3. A method as claimed in Claim 1 or 2 in which said favoured harmonic is an even harmonic and said comparison is made between said fundamental frequency and said even harmonic.

4. A method as claimed in Claim 3 in which the even harmonic is the first even harmonic.

5. A method as claimed in Claim 1 or 2 in which the comparison is made between two harmonic components.

6. A method of measuring fluid flow comprising exciting a vibratable system with a driving frequency substantially corresponding to the natural fundamental frequency of the system or a harmonic thereof while simultaneously subjecting the system to vibration induced by the fluid flow, the system having a design such that, when set into vibration by said driving frequency and said fluid flow, the generation of the first even harmonic component as a result of non-linearities and Coriolis force effects in the system is favoured, and comparing said first order harmonic component of the system vibration with the fundamental frequency component of the system vibration to derive a measure of the flow.

7. A method as claimed in any one of the previous claims comprising detecting said harmonic component or components and/or said fundamental frequency component at a pseudo-node of the system.

8. A method as claimed in any one of Claims 1 to 7 in which said system comprises at least one duct through which the fluid flow can be conducted in order to produce said flow induced vibration of the system.

9. A method as claimed in Claim 8 in which the duct comprises the double loop of a Coriolis mass flow meter.

10. Apparatus for measuring fluid flow comprising a system defining or adapted to be immersed in a flow path for fluid such that flow of fluid along said path imparts vibratory motion to the system, means for vibrating the system with a driving frequency so that, in use, the system can be simultaneously subjected to vibrations imparted by said means and by the fluid flow, the system having a design such that, when set into vibration by said driving frequency and said fluid flow, the generation of at least one harmonic component is favoured, and means for comparing said favoured harmonic component or components with one another and/or the fundamental frequency component of the system vibration to derive a measure of the flow.

11. Apparatus as claimed in Claim 10 in which said means for comparing said components includes at least one sensor arranged to detect said components at a location corresponding to a pseudo-node of the system.

Fig 1

EP 0 462 711 A1

Vibrations power $\{V^2\}$

10.0   8.0   6.0   4.0   2.0   0.0

Frequency (Hz)

0.0   25.0   50.0   75.0   100.0   125.0   150.0   175.0   200.0   225.0   250.0

F

H

Fig 2

Fig 3

EP 0 462 711 A1

Fig 4

EP 0 462 711 A1

## DOCUMENTS CONSIDERED TO BE RELEVANT

EP 91304854.2

| Category | Citation of document with indication, where appropriate, of relevant passages | Relevant to claim | CLASSIFICATION OF THE APPLICATION (Int. Cl.5) |
|---|---|---|---|
| D,X | US - A - 4 680 974 (SIMONSEN) * Abstract; column 1, lines 5-16; column 1, lines 40-49; column 1, line 63 - column 2, line 13; column 2, lines 21-26, 44-60; column 5, lines 5-14; | 1-3,5, 6,8,10 | G 01 F 1/84 |
| Y | -- | 9 | |
| Y | DE - A1 - 3 822 910 (FISCHER) * Abstract; fig. 3 * -- | 9 | |
| X | US - A - 4 823 613 (CAGE) * Column 10; claim 1 * -- | 1,3,4, 6,8,10 | |
| X | FR - A1 - 2 598 801 (ASSISTANTE INDUSTRIELLE DAUPHINOISE) * Page 8, lines 8-14; fig. 1-3 * ---- | 1-4,6, 8-10 | TECHNICAL FIELDS SEARCHED (Int. Cl.5) G 01 F |

The present search report has been drawn up for all claims

| Place of search | Date of completion of the search | Examiner |
|---|---|---|
| VIENNA | 20-09-1991 | ZAWODSKY |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)